Europäisches Patentamt

European Patent Office

Office européen des brevets

(11) Veröffentlichungsnummer: **0 121 184**
**B1**

(12) # EUROPÄISCHE PATENTSCHRIFT

(45) Veröffentlichungstag der Patentschrift:
**13.05.87**

(21) Anmeldenummer: **84103155.2**

(22) Anmeldetag: **22.03.84**

(51) Int. Cl.⁴: **B 01 F 17/42,** C 08 G 65/32,
C 08 F 2/26 // C09B67/00

(54) **Verwendung von Bis-Halbestern der Sulfobernsteinsäure mit Polyetherdiolen aud Basis Ethylenoxid/Propylenoxid bzw. ihrer Salze als Polymerisationsemulgatoren.**

(30) Priorität: **30.03.83 DE 3311601**

(43) Veröffentlichungstag der Anmeldung:
**10.10.84 Patentblatt 84/41**

(45) Bekanntmachung des Hinweises auf die Patenterteilung:
**13.05.87 Patentblatt 87/20**

(84) Benannte Vertragsstaaten:
**AT BE CH DE FR GB IT LI NL SE**

(56) Entgegenhaltungen:
**GB - A - 2 041 388**
**US - A - 3 329 640**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Höfer, Rainer, Dr., Klever Strasse 31, D-4000 Düsseldorf 30 (DE)**
Erfinder: **Bartnick, Bernhard, Wiener-Neustädter-Strasse 26, D-4019 Monheim-Baumberg (DE)**

## Beschreibung

Die Erfindung betrifft die neue Anwendung von Bis-Halbestern der Sulfobernsteinsäure mit Polyetherdiolen auf Basis Ethylenoxid/Propylenoxid und/oder bestimmter Salze hiervon als Emulgatoren bei der Emulsionspolymerisation ungesättigter Verbindungen.

Es sind bereits zahlreiche Polymerisationsemulgatoren bekannt. So werden auf diesem Gebiet Polyetherdiole auf Basis Ethylenoxid/Propylenoxid eingesetzt, die aus diskreten Polypropylenoxid und Polyethylenoxid-Blöcken aufgebaut sind. Derartige Produkte sind jedoch bei der Emulsionspolymerisation höchstens eingeschränkt verwendbar. Gerade für die Anwendung bei der Emulsionspolymerisation werden laufend neue oberflächenaktive Mittel gesucht, welche günstige Eigenschaften aufweisen, und zwar sowohl bei Herstellung der Emulsion als auch während der Polymerisation und insbesondere hinsichtlich der Eigenschaften des entstehenden Polymerlatex. Dies gilt um so mehr, als es dem Fachmann nicht möglich ist, aus dem chemischen Aufbau eines oberflächenaktiven Mittels auf seine Eigenschaften als Polymerisationsemulgator zuverlässige Rückschlüsse zu ziehen. Technisch besonders wertvoll sind Emulgatoren, die es erlauben, durch Emulsionspolymerisation feinteilige koagulatfreie, schaumarme Latices herzustellen, die zu wenig wasseranfälligen Polymerfilmen oder -Massen getrocknet werden können.

Aufgabe der Erfindung war es, bestimmte Derivate von Polyetherdiolen auf Basis Ethylenoxid/Propylenoxid aufzuzeigen, die als Polymerisationsemulgatoren besonders geeignet sind.

Aus GB-A-2041388 sind bereits Monoester der Sulfonbernsteinsäure bekannt, die als Dispergiermittel, genauer gesagt als Pigmentdispergatoren Verwendung finden.

Gegenstand der Erfindung ist somit die Verwendung von Bis-Halbestern der Sulfobernsteinsäure mit Polyetherdiolen auf Basis Ethylenoxid und Propylenoxid als dispersionsstabilisierende Verbindungen, dadurch gekennzeichnet, dass Bis-Halbestern der Sulfobernsteinsäure von Ethylenoxid/Propylenoxid-Blockcopolymeren mit 15–90 Mol-% Ethylenoxideinheiten und zwei endständigen Hydroxylgruppen und/oder ihre Ammonium- und/oder Alkalimetallsalze als Emulgatoren bei der Emulsionspolymerisation ethylenisch ungesättigter Verbindungen, gewünschtenfalls in Gegenwart weiterer Emulgatoren oder üblicher Hilfsstoffe, eingesetzt werden.

Bis-sulfobernsteinsäurehalbester von Polyetherdiolen auf Basis von Ethylenoxid/Propylenoxid sind bereits bekannt. Sie wurden bisher als Verflüssigungsmittel (Strukturbrecher) zu hochkonzentrierter Tensidlösung eingesetzt. Es darf angenommen werden, dass die Eignung der Substanzen für diese Anwendung auf ihrer Fähigkeit beruht, in hochkonzentrierten Tensidlösungen die Ausbildung von Micellen zu stören. Demgegenüber ist aber die Ausbildung von Micellen in wässriger Lösung die charakteristische Eigenschaft oberflächenaktiver Mittel. Es lag daher für den Fachmann in keiner Weise nahe, die für ihre micellstörenden Eigenschaften bekannten Produkte als oberflächenaktive Mittel, also als Micellbildner, einzusetzen. Zudem weichen die erfindungsgemäss verwendeten Substanzen von dem klassischen Hydrophil/Hydrophob-Aufbau von Emulgatoren ab, da sie an beiden Kettenenden hydrophile, zur Ausbildung von Ionen befähigte Gruppen tragen.

Die als Polymerisationsemulgatoren beanspruchten Verbindungen enthalten ein Polyetherdiol als Mittelglied, dessen endständige Hydroxylgruppen jeweils zu Sulfobernsteinsäureestern umgesetzt worden sind. Wenngleich angestrebt wird, dass an beiden Kettenenden Halbestergruppen vorliegen, so umfasst der Begriff Bis-sulfobernsteinsäurehalbester (= Bis-Halbester der Sulfobernsteinsäure) im Sinne der Erfindung auch Stoffgemische, die höchstens 30%, vorzugsweise höchstens 10% Monosulfobernsteinsäurehalbester der Polyetherdiole oder Sulfobernsteinsäureester enthalten.

Zur Herstellung der erfindungsgemäss verwendeten Produkte wird von Polyetherdiolen auf Basis Ethylenoxid/Propylenoxid ausgegangen. Bevorzugt eingesetzt werden können Polyetherdiole mit einem Molekulargewicht (Zahlenmittel) zwischen 400 und 20000, vorzugsweise zwischen 1000 und 15000 und insbesondere zwischen 2000 und 10000). Für die erfindungsgemässe Anwendung ist es wichtig, dass diese sowohl Ethylenoxid- wie auch Propylenoxideinheiten enthalten, welche vorzugsweise als Blöcke vorliegen. Bevorzugt sind Blockcopolymere mit 15–90 Mol-% Einheiten, die sich von Ethylenoxid ableiten, insbesondere mit 30–60 Mol-% Einheiten, die sich von Ethylenoxid ableiten. Erfindungsgemäss geeignete Produkte sind bei der Polymerisationstemperatur klar wasserlöslich; sie weisen als Alkali- oder Ammoniumsalze einen Trübungspunkt (bestimmt nach DIN 53917) von mehr als 60°C, insbesondere von mehr als 80°C auf.

Es können Blockcopolymere eingesetzt werden, die insgesamt nur aus zwei Blöcken aufgebaut sind. Verwendet werden können aber auch Multiblockcopolymere, insbesondere Triblockcopolymere. Blockcopolymere aus Ethylenoxid und Propylenoxid sind bereits bekannt. Sie werden z.B. von N. Schönfeldt in dem Buch «Grenzflächenaktive Ethylenoxidaddukte», Stuttgart 1976, S.53 ff beschrieben.

Die Herstellung der erfindungsgemäss zu verwendenden Verbindungen ist einfach. Man geht von Polyetherdiolen auf Basis Ethylenoxid/Propylenoxid mit den beschriebenen Eigenschaften aus und setzt diese bei Temperaturen von 95–110°C mit 1,5–2,5 mol, vorzugsweise mit 1,9–2,2 mol, Maleinsäureanhydrid um. An die so entstandenen Bis-maleinsäurehalbester werden in Gegenwart von Wasser unter Reaktion der C-C-Doppelbindung Hydrogensulfite oder Sulfite addiert. Hierzu werden – bezogen auf Maleinsäurehalbestergruppen – 0,95–1,5, vorzugsweise jedoch 1,05–1,2 Äquivalente Ammonium- und/oder Alkalisulfite bzw. Hydrogensulfite oder Pyrosulfite eingesetzt. Die Reaktionstemperatur beträgt dabei 20–100°C, vorzugsweise 50–90°C. Die Reaktionsprodukte fallen als wässrige Lösungen oder Dispersionen ihrer Alkali- oder Ammoniumsalze an. Sie können als solche erfindungsgemäss ohne weitere Reinigungs- oder Aufarbeitungsschritte eingesetzt werden.

Die Erfindung betrifft die Verwendung der Bis-sulfobernsteinsäurehalbester als Emulgatoren bei der Emulsionspolymerisation wasserunlöslicher Monomerer. So können unter Zuhilfenahme der Bis-sulfobernsteinsäurehalbester polymerisiert werden: Vinylaromaten, wie Styrol- oder Methylstyrol, Vinylhalogenide wie Vinylchlorid oder Vinylidenchlorid, Vinylester wie Vinylacetat, Vinylamide, $\alpha$-$\beta$-ungesättigte Carbonsäuren wie Acrylsäure oder Methacrylsäure, deren Ester mit $C_1$–$C_{10}$, vorzugsweise $C_1$-$C_4$-Alkoholen, deren Amide, deren Nitrile und/oder Diolefine wie Butadien oder Isopren.

Die Bis-sulfobernsteinsäurehalbester werden bei der Emulsionspolymerisation in Mengen von 0,01–5 Gew.-%, bezogen auf Gesamtemulsion eingesetzt. Bevorzugt ist ein Einsatz in Mengen von 1 bis 3 Gew.-%. Dabei können die unterschiedlichsten Emulsionspolymerisationsverfahren angewendet werden. So kann die Gesamtmenge des Emulgators in wässriger Lösung vorgelegt werden. Andererseits ist es auch möglich, den Emulgator während der Polymerisation in mehreren Positionen oder kontinuierlich zuzugeben. Erfindungsgemäss sind auch Emulsionspolymerisationsverfahren ausführbar, bei denen eine Präemulsion aus Wasser und Monomeren gebildet wird und diese portionsweise oder kontinuierlich in das Reaktionsgefäss geleitet wird. Die Emulsionspolymerisation kann in neutralem, alkalischem oder saurem Medium durchgeführt werden. Bevorzugt sind jedoch pH-Werte grösser 3, insbesondere zwischen 4 und 8, bei denen die erfindungsgemäss eingesetzten Substanzen zumindest teilweise in Salzform vorliegen. Es ist daher bevorzugt, die Bis-sulfobernsteinsäurehalbester zumindest teilweise als Ammonium- und/oder Alkalimetallsalze einzusetzen. Dabei sind die Natriumsalze besonders geeignet.

Die erfindungsgemäss verwendeten Bis-sulfobernsteinsäurehalbester sind mit üblichen Polymerisationshilfsstoffen verträglich. So können die bei der Emulsionspolymerisation gängigen Polymerisationsinitiatoren, Polymerisationsbeschleuniger oder aber Molekulargewichtsregler mit verwendet werden. Zusammen mit den Bis-sulfobernsteinsäurehalbestern können weitere Emulgatoren, insbesondere nichtionische Emulgatoren oder anionische Emulgatoren, in Mengen, die allein für die Emulsionspolymerisation noch nicht ausreichend wären, mit verwendet werden. Dies ist jedoch nicht zwingend, da die Bis-sulfobernsteinsäurehalbester sich dadurch auszeichnen, dass sie als Alleinemulgatoren bei der Herstellung von Polymerdispersionen hervorragende Ergebnisse liefern.

Die erfindungsgemässe Verwendung der Bis-sulfobernsteinsäurehalbester von Polyetherdiolen auf Ethylenoxid/Propylenoxid-Basis erlaubt es, koagulatfreie besonders feinteilige Polymerdispersionen herzustellen. Diese sind schaumarm, wodurch das Entfernen gasförmiger Restmonomerer möglich wird, und zeigen hohe Stabilität auch bei Lagerung unter ungünstigen Bedingungen. Darüber hinaus nehmen aus den Dispersionen hergestellte Filme oder Polymermassen nur wenig Wasser auf, was für viele Anwendungen gewünscht wird.

Die nachfolgenden Beispiele dienen zur näheren Erläuterung der Erfindung. In den Beispielen A bis C wird Herstellung und Verwendung der erfindungsgemässen Produkte beschrieben. Die Beispiele D bis G sind Vergleichsbeispiele.

Beispiele

1. Herstellung von Bis-sulfobernsteinsäurehalbestern

1.1 Eingesetzte Polyetherdiole auf Basis Ethylenoxid (EO)/Propylenoxid (PO)

A EO/PO-Blockcopolymer mit ca. 80 Mol-% EO im Molekül OH-Zahl 24,7 (Texadril® 8780, Henkel KGaA),

B EO/PO-Blockcopolymer mit ca. 50 Mol-% EO im Molekül OH-Zahl 52,0,

C EO/PO-Blockcopolymer mit ca. 40 Mol-% EO im Molekül OH-Zahl 72,1,

D EO/PO-Blockcopolymer mit ca. 10 Mol.% EO im Molekül OH-Zahl 88 (Texadril® 2010, Henkel, KGaA),

E Polypropylenglykol Molgewicht 2020,
F Polyethylenglykol Molgewicht 1550,
G Polyethylenglykol Molgewicht 3000.

1.2. Herstellverfahren
In einem Raktionsgefäss mit Rührer, Rückflusskühler, Tropftrichter, Thermometer und Gaseinleitungsrohr wurden die angegebenen Mengen Polyetherdiol und Maleinsäureanhydrid vorgelegt und das Reaktionsgefäss mit Stickstoff gespült. Das Reaktionsgemisch wurde unter kräftigem Rühren auf 105°C erhitzt und 2 h lang bei dieser Temperatur gehalten. Danach wurde auf 75°C abgekühlt. Nach Zugabe der angegebenen Menge Natriumsulfit in wässriger Lösung wurde das Gemisch auf einer Temperatur von 75 bis 80°C gehalten, bis die Sulfitierungsreaktion nach etwa 2 h beendet war. Da Maleinsäureanhydrid zur Sublimation neigt, kann es vorteilhaft sein, in Druckgefässen bei einem Überdruck von 0,2 bis 1 bar Stickstoff oder Luft zu arbeiten. Es ist auch bekannt und auf die hier geschilderten Vorgehensweise anwendbar, bei diesen Temperaturen (40–80 °C) in Gegenwart von 0,1 bis 1,0% Alkalihydroxid als Katalysator zu arbeiten.

Tabelle 1
Eingesetzte Ausgangsstoffe zur Herstellung von Bis-sulfobernsteinsäurehalbester von Polyetherdiolen.

| | Beispiel | | | | | | |
| | A | B | C | D | E | F | G |
|---|---|---|---|---|---|---|---|
| A | 655 g | – | – | – | – | – | – |
| B | – | 634 g | – | – | – | – | – |
| C | – | – | 560 g | – | – | – | – |
| D | – | – | – | 427 g | – | – | – |
| E | – | – | – | – | 614 g | – | – |
| F | – | – | – | – | – | 582 g | – |
| G | – | – | – | – | – | – | 652 g |
| Maleinsäureanhydrid | 30 g | 58 g | 72 g | 66 g | 60 g | 74 g | 43 g |
| Natriumsulfit | 40 g | 75 g | 93 g | 85 g | 81 g | 100 g | 58 g |
| Wasser | 725 g | 733 g | 725 g | 557 g | 745 g | 744 g | 747 g |

Tabelle 2
Eigenschaften der Bis-sulfobernsteinsäurehalbester von Polyetherdiolen als Na-Salze.

| | Beispiel | | | | | | |
| | A | B | C | D | E | F | G |
|---|---|---|---|---|---|---|---|
| Analyse: | | | | | | | |
| Trockenrückstand Gew.-% | 50 | 47,3 | 49,8 | 46,0 | n.b. | 49,6 | 50,1 |
| Säurezahl | 6,0 | 4,7 | 10 | 9,9 | n.b. | 6,1 | 8,4 |
| anorg. Sulfat Gew.-% | 0,2 | 0,2 | 0,1 | 0,1 | n.b. | 0,2 | 0,2 |
| anorg. Sulfit Gew.-% (als $SO_2$) | 0,11 | 0,02 | 0,11 | 0,07 | n.b. | 0,02 | 0,05 |
| org. gebundenes Sulfonat (nach Epton) | 1,0 | 1,7 | 2,4 | 2,2 | n.b. | 1,75 | 0,66 |
| Aussehen | klar flüssig | klar flüssig | klar flüssig | klar flüssig | trübe Phasen-trennung | klar flüssig | klar flüssig |
| Trübungspunkt °C (1%ig in Wasser) | >80 | >80 | >80 | 38 | n.b. | >80 | >80 |
| Löslichkeit in Wasser bei 25 °C | in jedem Verhältnis klar löslich | | | | unlöslich | in jedem Verhält-nis löslich | |

## 2. Verwendung von Bis-Sulfobernsteinsäurehalbestern von Polyetherdiolen als Emulgatoren bei der Emulsions-Polymerisation

In den Beispielen 1–3 wird der erfindungsgemässe Einsatz der nach Beispiel A bis C hergestellten Verbindungen in der Emulsions-Polymerisation beschrieben. Zum Vergleich werden in den Beispielen 4 und 5 ausserhalb der Erfindung liegende Bisulfobernsteinsäurehalbester hergestellt nach Beispiel D bzw. E getestet.

### Beispiel F (5)

Als weitere Vergleichsbeispiele werden in 6 und 7 nichtionische EO/PO Blockpolymere und in 8 ein konventioneller anionischer Emulgator untersucht. Nach Beispiel 1–3 wird erfindungsgemäss während der Polymerisation kein Koagulat gebildet. Die Latices sind schaumarm und zeigen die geringsten Werte der Wasseraufnahme.

### 2.1 Durchführung der Polymerisation

Apparatur
Die Emulsions-Polymerisation wurde drucklos in einem 2-l-Glasautoklaven mit Ankerrührer durchgeführt.

Rezeptur
Vinylacetat-isodecansäurevinylester-copolymer (Gewichtsverhältnis 70:30).
Emulgatoreinsatzmenge 2,5 Gew.-%, bezogen auf Monomere.

Reaktorvorlage
256,0 g entsalztes Wasser,
6,0 g Emulgator, 100%ig
0,5 g Kaliumperoxodisulfat,
0,5 g Borax
pH-Wert der Reaktionsmischung 7–8.

Vorlage in Dosierbehältern
Mischung I
243,0 g entsalztes Wasser
6,0 g Emulgator, 100%,
2,0 g Kaliumperoxodisulfat,
2,0 g Borax

Mischung II
340,0 g Vinylacetat,
144,0 g Isodecansäurevinylester (Veo.Va10® Shell)
4,0 g Acrylsäure

Mischungen I und II werden im Dosierbehälter emulgiert; der pH-Wert der Pre-Emulsion soll ca. 4,0 betragen.

Zur Durchführung der Emulsions-Polymerisation wurde zunächst das Reaktionsgefäss mit der Reaktorvorlage beschickt. Danach wurde im Dosierbehälter aus den Mischungen I und II eine Emulsion hergestellt und diese während 2 h in das auf 80 °C temperierte, mit Stickstoff gespültes Reaktionsgefäss gegeben. Die Nachreaktionszeit betrug 2 h bei 85 °C. Es wurde dann auf Raumtemperatur gekühlt und anschliessend geprüft.

Prüfmethoden

1. Trockengehalt

Trockenrückstandsbestimmungswaage (Fa. Satorius), Typ 709301. Der Feststoffgehalt wird bei Stufe 7 und 20 min Trockenzeit bestimmt. Die Einwaage beträgt ca. 5 g.

2. Koagulatgehalt nach der Herstellung

Die fertiggestellte Dispersion wird durch einen tarierten Perlonsiebbeutel der Fa. Schwegmann mit 80 micron Maschenweite abgefüllt. Der Siebbeutel mit ev. vorhandenem Koagulat wird 24 h bei 105 °C getrocknet und das Koagulat durch Differenzwägung bestimmt.

3. Bestimmung der Teilchengrösse

Die Teilchengrösse wird nach folgenden Massstäben visuell bestimmt:

milchig-weisse Dispersion = oberhalb 1 micron
bäulich-weisse bis bräunlich-weisse Dispersion = 1 micron bis 0,1 micron
grau-weisse, semitransparente Dispersion = 0,1 micron bis 0,05 micron
praktisch transparente = unter 0,05 micron

4. pH-Wert

Der pH-Wert wird mit einem handelsüblichen pH-Meter bestimmt.

5. Mechanische Stabilität

80 g der Dispersion werden 30 min bei 14,000 Upm mit einem Klaxon-Rührer, Typ 5 UB 2 (Klaxon Ltd.), gerührt und anschliessend durch einen 80-Micron-Siedebeutel der Fa. Schwegmann filtriert. Der Koagulatanteil wird durch Trocknung und Differenzwägung des ev. im Siebbeutel verbliebenen Koagulates bestimmt (analog ASTM D 1076).

6. Viskosität

Die Viskosität wird mit einem Brookfield-Viskosimeter vom Typ RVT bei 25 °C gemessen.

7. Bestimmung der prozentualen Wasseraufnahme und Quellung

Wasseraufnahme

Geprüft werden je drei Dispersionsfilme der Abmessung $75 \times 35 \times 0,5$ mm. Die Filme werden gekennzeichnet, 48 h im Umluftofen bei 50 °C getrocknet, anschliessend gewogen und danach in deionisiertem Wasser gelagert. Je nach Anforderung werden die Dispersionsfilme nach 24- und 48- oder mehrstündiger Wasserlagerung vorsichtig durch Betupfen mit Zellstofftüchern getrocknet, dann gewogen und die Gewichtszunahme in Prozenten ausgerechnet.

Quellung

Der prozentuale Zahlenwert der Quellung errechnet sich: % Quellung = Gewichtsprozent Wasseraufnahme $\times$ Dichte der Polymerdispersion.

8. Filmbeurteilung

Mit einem Ziehlineal (ca. 1 mm Spalthöhe) werden zwei Filme ausgezogen.
Ein Film wird 48 h bei Raumtemperatur getrocknet, der andere Film 24 h bei 105 °C.

9. Gefrier-/Tau-Stabilität

Jeweils ca. 50 g der Dispersion werden in 50-ml-Weithalsflaschen etwa 16 h bei –5 und –10 °C eingefroren und anschliessend etwa 8 h bei Raumtemperatur wieder aufgetaut (= 1 Zyklus). Diese Behandlung wird bis zur Koagulation der Probe oder max. über 5 Zyklen wiederholt. Angegeben wird die Koagulation nach X Zyklen bei entsprechender Temperatur.

| Prüf-beispiel Nr. | Emulgator (Gew.-% Einsatzmenge bez. auf Monomere) | Trocken-rückstand % | Koagulat bei der Polymerisation % | Teilchen-grösse der Dispersion in micron | pH-Wert | mechan. Stabilität nach Klaxon bei pH-Wert 0,7 | |
|---|---|---|---|---|---|---|---|
| | | | | | | min | Koagulat % |
| Erfindungsbeispiele | | | | | | | |
| 1 | 2,5% Emulgator nach Beispiel A | 49,6 | 0 | <0,1 | 4,3 | 30 | 0 |
| 2 | 2,5% Emulgator nach Beispiel B | 49,5 | 0 | <0,1 | 4,5 | 30 | 0 |
| 3 | 2,5% Emulgator nach Beispiel C | 49,5 | 0 | <0,1 | 4,5 | 30 | 0 |
| Vergleichsbeispiele | | | | | | | |
| 4 | 2,5% Emulgator nach Beispiel D | n.b. | 100 | n.b. | n.b. | n.b. | n.b. |
| 5 | 2,5% Emulgator nach Beispiel F | 46,6 | 5 | 0,1–1 | 4,2 | 30 | 0 |
| 6 | 2,5% EO/PO-Blockcopolymer mit ca. 50% EO im Molekül (Veresterungskomponente B) | 47,0 | 5 | 0,1–2 | 4,2 | 30 | 0 |

| Prüf-bei-spiel Nr. | Emulgator (Gew.-% Einsatzmenge bez. auf Monomere) | Trocken-rückstand % | Koagulat bei der Polymeri-sation % | Teilchen-grösse der Dispersion in micron | pH-Wert | mechan. Stabilität nach Klaxon bei pH-Wert 0,7 min | Koagulat % |
|---|---|---|---|---|---|---|---|
| Versuchsbeispiele | | | | | | | |
| 7 | 2,5% EO/PO-Blockcopolymer mit ca. 40% EO im Molekül (Veresterungskomponente C) | 46,0 | 5–10 | 0,1–2 | 4,1 | 30 | 0 |
| 8 | Dodecylbenzolsulfonat-Na-Salz | 49,0 | 0,2 | <0,1 | 4,2 | 3 | Schaum |

| Prüfbei-spiele Nr. | Emulgator % Einsatzmenge (AS 100%, bez. auf Monomere) | Viskosität nach Brookfield bei 25°C in mPa.s | Wasseraufnahme und Quellung % Wasser | % Quellung | Filmbeurteilung bei Zimmertemp. | bei 105°C |
|---|---|---|---|---|---|---|
| Erfindungsbeispiele | | | | | | |
| 1 | 2,5% Emulgator nach Beispiel A | 110 | 12,3 | 13,1 | farblos, klar | gelblich, klar |
| 2 | 2,5% Emulgator nach Beispiel D | 140 | 14,0 | 14,8 | farblos, klar | gelblich, klar |
| 3 | 2,5% Emulgator nach Beispiel C | 100 | 17,0 | 18,0 | farblos, klar | gelblich, klar |
| Vergleichsbeispiele | | | | | | |
| 4 | 2,5% Emulgator nach Beispiel D | n.b. | n.b. | n.b. | n.b. | n.b. |
| 5 | 2,5% Emulgator nach Beispiel F | 20 | 22,0 | 23,3 | farblos, klar | gelblich, klar |
| 6 | 2,5% EO-PO-Blockcopolymer mit ca. 50% EO im Molekül (Veresterungskomponente B) | 20 | 20,9 | 22,2 | farblos, klar | gelblich, klar |
| 7 | 2,5% EO/PO-Blockcopolymer mit ca. 40% EO im Molekül (Veresterungskomponente C) | 20 | 29,7 | 31,5 | farblos, klar | gelblich, klar |
| 8 | Dodecylbenzolsulfonat-Na-Salz | 170 | 18,5 | 19,6 | farblos, klar | rotbraun, klar |

| Prüfbei-spiel Nr. | Emulgator % Einsatzmenge (AS 100%, bez. auf Monomere) | Gefrier-/Tau-Stabilität −5°C Zyklus | Koagulat % | −10°C Zyklus | Koagulat % | Lagerstabilität Monate | Koagulat % |
|---|---|---|---|---|---|---|---|
| Erfindungsbeispiele | | | | | | | |
| 1 | 2,5% Emulgator nach Beispiel A | 5 | 0 | 1 | 100 | 6 | 0 |
| 2 | 2,5% Emulgator nach Beispiel B | 5 | 0 | 1 | 100 | 6 | 0 |
| 3 | 2,5% Emulgator nach Beispiel C | 5 | 0 | 1 | 100 | 6 | 0 |
| Vergleichsbeispiele | | | | | | | |
| 4 | 2,5% Emulgator nach Beispiel D | n.b. | n.b. | n.b. | n.b. | n.b. | n.b. |
| 5 | 2,5% Emulgator nach Beispiel F | 5 | 0 | 1 | 80 | 3 | 10 |
| 6 | 2,5% EO/PO/Blockcopolymer mit ca. 50% EO im Molekül (Veresterungskomponente B) | 5 | 0 | 5 | 0 | 4 | 40 |
| 7 | 2,5% EO/PO-Blockpolymer mit ca. 40% EO im Molekül (Veresterungskomponente C) | 5 | 0 | 5 | 0 | 3 | 50 |
| 8 | Dodecylbenzolsulfonat-Na-Salz | 5 | 0 | 1 | 100 | 6 | 0 |

## Patentansprüche

1. Verwendung von Bis-Halbestern der Sulfobernsteinsäure mit Polyetherdiolen auf Basis Ethylenoxid und Propylenoxid als dispersionsstabilisierende Verbindungen, dadurch gekennzeichnet, dass Bis-Halbestern der Sulfobernsteinsäure von Ethylenoxid/Propylenoxid-Blockcopolymeren mit 15–90 Mol-% Ethylenoxideinheiten und zwei endständigen Hydroxylgruppen und/oder ihre Ammonium- und/oder Alkalimetallsalze als Emulgatoren bei der Emulsionspolymerisation ethylenisch ungesättigter Verbindungen, gewünschtenfalls in Gegenwart weiterer Emulgatoren oder üblicher Hilfsstoffe, eingesetzt werden.

2. Verwendung nach Anspruch 1, dadurch gekennzeichnet, dass Bis-Halbester der Sulfobernsteinsäure von Polyetherdiolen mit einem Molekulargewicht 400–20000, vorzugsweise 1000–15000 und insbesondere 200–10000 eingesetzt werden.

3. Verwendung nach den Ansprüchen 1 und 2, dadurch gekennzeichnet, dass Bis-Halbester der Sulfobernsteinsäure von Ethylenoxid/Propylenoxid-Blockcopolymeren mit 30–80 Mol-% Ethylenoxideinheiten und zwei endständigen Hydroxylgruppen eingesetzt werden.

4. Verwendung nach den Ansprüchen 1–3, dadurch gekennzeichnet, dass die Bis-Sulfobernsteinsäurehalbester bei der Emulsionspolymerisation von Vinylaromaten, Vinylhalogeniden, Vinylestern, Vinylamiden, α-β-ungesättigten Carbonsäuren, deren Estern, deren Amiden, deren Nitrilen und/oder von Dienen eingesetzt werden.

5. Verwendung nach den Ansprüchen 1–4, dadurch gekennzeichnet, dass die Bis-Sulfobernsteinsäurehalbester in Mengen von 0,01–5 Gew.-%, bezogen auf Gesamtemlusion, eingesetzt werden.

6. Verwendung nach den Ansprüchen 1–5, dadurch gekennzeichnet, dass als weitere Emulgatoren nichtionische und/oder anionische Emulgatoren mitverwendet werden.

7. Verwendung nach den Ansprüchen 1–6, dadurch gekennzeichnet, dass als weitere Hilfsstoffe Polymerisationsinitiatoren, Polymerisationsbeschleuniger, Schutzkolloide und/oder Molekulargewichtsregler mitverwendet werden.

## Claims

1. The use of bis-semiesters of sulfosuccinic acid with polyether diols based on ethylene oxide and propylene oxide as dispersion-stabilizing compounds, characterized in that bis-semiesters of sulfosuccinic acid of ethylene oxide/propylene oxide block copolymers containing 15–90 mole-% ethylene oxide units and two terminal hydroxyl groups and/or ammonium and/or alkali metal salts thereof are used as emulsifiers in the emulsion polymerization of ethylenically unsaturated compounds, if desired in the presence of other emulsifiers or standard auxiliaries.

2. The use claimed in claim 1, characterized in that bis-semiesters of sulfosuccinic acid of polyether diols having a molecular weight of from 400 to 20,000, preferably from 1000 to 15,000 and more preferably from 2000 to 10,000 are used.

3. The use claimed in claims 1 and 2, characterized in that bis-semiesters of sulfosuccinic acid of ethylene oxide/propylene oxide block copolymers containing from 30 to 80 mole-% ethylene oxide units and two terminal hydroxyl groups are used.

4. The use claimed in claims 1 to 3, characterized in that the bis-sulfosuccinic acid semiesters are used in the emulsion polymerization of aromatic vinyl compounds, vinyl halides, vinyl esters, vinyl amides, α,β-unsaturated carboxylic acids, their esters, their amides, their nitriles and/or of dienes.

5. The use claimed in claims 1 to 4, characterized in that the bis-sulfosuccinic acid semiesters are used in quantities of from 0.01 to 5% by weight, based on the emulsion as a whole.

6. The use claimed in claims 1 to 5, characterized in that nonionic and/or anionic emulsifiers are used as further emulsifiers.

7. The use claimed in claims 1 to 6, characterized in that polymerization initiators, polymerization accelerators, protective colloids and/or molecular weight regulators are used as further auxiliaries.

## Revendications

1. Utilisation de bis-semiesters d'acide sulfosuccinique avec des polyéther-diols à base d'oxyde d'éthylène et d'oxyde de propylène comme composés stabilisateurs de dispersion, caractérisée en ce qu'on utilise des bis-semiesters d'acide sulfosuccinique de copolymères à blocs oxyde d'éthylène/oxyde de propylène à 15–90 moles-% d'unités oxyde d'éthylène et à deux groupes hydroxyle terminaux, et/ou de leurs sels d'ammonium et/ou de métaux alcalins, comme émulsifiants dans la polymérisation en émulsion de composés éthyléniquement insaturés, si on le désire en présence d'autres émulsifiants ou de substances auxiliaires usuelles;

2. Utilisation selon la revendication 1, caractérisée en ce qu'on utilise des bis-semiesters d'acide sulfosuccinique de polyéther-diols ayant un poids moléculaire de 400 à 20000, de préférence de 1000 à 15000 et en particulier de 2000 à 10000.

3. Utilisation selon les revendications 1 et 2, caractérisée en ce qu'on utilise des bis-semiesters d'acide sulfosuccinique de copolymères à blocs oxyde d'éthylène/oxyde de propylène à 30 à 80 moles-% d'unités oxyde d'éthylène et à deux groupes hydroxyle terminaux.

4. Utilisation selon les revendications 1 à 3, caractérisée en ce qu'on utilise des bis-semiesters d'acide sulfosuccinique dans la polymérisation en émulsion d'hydrocarbures aromatiques vinyliques, d'halogénures de vinyle, d'esters vinyliques, de vinylamides, d'acides carboxyliques α,β-insaturés, de leurs esters, de leurs amides, de leurs nitriles et/ou de diènes.

5. Utilisation selon les revendications 1 à 4, caractérisée en ce qu'on utilise les bis-semiesters d'acide sulfosuccinique en des quantités de 0,01 à 5% en poids par rapport à l'émulsion totale.

6. Utilisation selon les revendications 1 à 5, caractérisée en ce qu'on utilise conjointement comme autres émulsifiants des émulsifiants non ioniques et/ou anioniques.

7. Utilisation selon les revendications 1 à 6, caractérisée en ce qu'on utilise conjointement comme autres substances auxiliaires des initiateurs de polymérisation, des accélérateurs de polymérisation, des colloïdes protecteurs et/ou des régulateurs du poids moléculaire.